# EUROPÄISCHE PATENTANMELDUNG

(11) **EP 4 059 850 A1**
(43) Veröffentlichungstag der Anmeldung: **21.09.2022**
(21) Anmeldenummer: 22151810.3
(22) Anmeldetag: 17.01.2022
(51) Int. Cl.: B65B 35/04, B65B 43/44, B65B 3/00, B65B 57/04, B65B 43/46, B65G 1/02

(54) **FÜLLVORRICHTUNG FÜR EINEN TUBEN-SPEICHER EINER VERPACKUNGSMASCHINE UND VERFAHREN ZUM FÜLLEN EINES TUBEN-SPEICHERS**

(30) Priorität: 16.03.2021 DE 102021110637
(71) Anmelder: IWK Verpackungstechnik GmbH, 76297 Stutensee (DE)
(72) Erfinder: Behringer, Thomas, 76467 Bietigheim (DE)
(74) Vertreter: Lichti - Patentanwälte Partnerschaft mbB

(57) **Zusammenfassung**

Eine Füllvorrichtung für einen Tuben-Speicher einer Verpackungsmaschine weist eine Lagervorrichtung mit zumindest einer Lagereinheit auf. In jeder Lagereinheit ist zumindest ein Tuben-Feld mit mehreren Tuben angeordnet. Es ist eine Umsetzvorrichtung vorgesehen, mittels der zumindest einige Tuben des Tuben-Feldes aus der Lagereinheit entnehmbar und in den Tuben-Speicher einsetzbar sind. Die Lagervorrichtung weist eine Tragkonstruktion auf, an der die Lagereinheit abgestützt ist. Die Lagereinheit besitzt zumindest eine Schublade, die verschieblich an der Tragkonstruktion gelagert ist und zwischen einer Ruheposition und einer Entnahmeposition verstellt werden kann.

## Beschreibung

Die Erfindung betrifft eine Füllvorrichtung für einen Tuben-Speicher einer Verpackungsmaschine mit einer Lagervorrichtung mit zumindest einer Lagereinheit, wobei in jeder Lagereinheit zumindest ein Tuben-Feld mit mehreren Tuben angeordnet ist, und einer Umsetzvorrichtung, mittels der zumindest einige Tuben des Tuben-Feldes aus der Lagereinheit entnehmbar und in den Tuben-Speicher einsetzbar sind, wobei die Lagervorrichtung eine Tragkonstruktion aufweist, an der die Lagereinheit abgestützt ist.

Darüber hinaus betrifft die Erfindung ein Verfahren zum Füllen eines Tuben-Speichers einer Verpackungsmaschine, mit einer Lagervorrichtung mit zumindest einer Lagereinheit, in der zumindest ein Tuben-Feld mehreren Tuben angeordnet ist, wobei zumindest einige Tuben des Tuben-Feldes mittels einer Umsetzvorrichtung zumindest teilweise aus der Lagereinheit entnommen und in den Tuben-Speicher eingesetzt werden.

In einer Verpackungsmaschine insbesondere in Form einer Tubenfüllmaschine wird in einem Tuben-Speicher insbesondere in Form eines Förderbandes und/oder in Form eines vertikalen Schachtes eine Vielzahl von vorgefertigten Tuben-Rohlingen vorgehalten. Die Verpackungsmaschine entnimmt eine Tube aus dem Tuben-Speicher und setzt sie in einen Tuben-Halter ein, in dem sie mehrere Stationen der Tubenfüllmaschine durchläuft und dabei mit dem gewünschten Produkt befüllt und anschließend verschlossen wird.

Um den kontinuierlichen, ordnungsgemäßen Betrieb der Verpackungsmaschine sicherzustellen, ist es notwendig, dass der Tuben-Speicher ständig mit Tuben nachgefüllt wird. Während dies früher manuell erfolgte, ist es mittlerweile möglich, das Nachfüllen des Tuben-Speichers maschinell durchzuführen. Zu diesem Zweck kann eine Umsetzvorrichtung in Form eines Industrie-Roboters vorgesehen sein, der als Gelenkarm-Roboter ausgebildet ist. Auf einer Tragkonstruktion in Form einer Palette sind eine Vielzahl von Kartons übereinander und nebeneinander aufgestapelt, die jeweils eine Lagereinheit bilden. Alternativ kann vorgesehen sein, die Kartons mittels zumindest eines Förderbandes oder mittels Rollenbahnen zuzuführen. In jeder Lagereinheit ist zumindest ein Tuben-Feld mit mehreren Tuben angeordnet.

An der Abnahmestelle ergreift die Umsetzvorrichtung einige Tuben aus dem Karton und legt sie in dem Tuben-Speicher, d.h. auf dem Förderband oder in dem Schacht ab. Der leere Karton wird von einer Fördervorrichtung abgeführt und der nächste Karton wird zugeführt und bereitgestellt.

Die bekannte Nachfüllvorrichtung für den Tuben-Speicher einer Verpackungsmaschine ist nicht nur konstruktiv aufwändig und teuer, sondern benötigt auch relativ viel Bauraum, der an den Produktionsstätten üblicherweise knapp ist.

Darüber hinaus fällt bei der bekannten Nachfüllvorrichtung relativ viel Verpackungsmüll an und die leeren Kartons müssen in aufwändiger Weise abgeführt werden, wofür eine Fördervorrichtung notwendig ist.

Der Erfindung liegt die Aufgabe zugrunde, eine Füllvorrichtung für einen Tuben-Speicher einer Verpackungsmaschine auszubilden, mit der ein schnelles und einfaches Befüllen des Tuben-Speichers möglich ist und bei der möglichst wenig Verpackungsmüll anfällt.

Darüber hinaus soll ein Verfahren zum Füllen eines Tuben-Speichers einer Verpackungsmaschine geschaffen werden, mit dem der Tuben-Speicher schnell und in einfacher Weise nachgefüllt werden kann.

Diese Aufgabe wird erfindungsgemäß mit einer Füllvorrichtung mit den Merkmalen des Anspruchs 1 gelöst. Dabei ist vorgesehen, dass die Lagereinheit zumindest eine Schublade aufweist, die verschieblich an der Tragkonstruktion gelagert ist.

Erfindungsgemäß wird von der Grundüberlegung ausgegangen, das Tuben-Feld mit mehreren Tuben in einer Schublade anzuordnen, aus der die Umsetzvorrichtung die Tuben des Tuben-Feldes vollständig oder zumindest teilweise entnimmt. Vorzugsweise sind die Tuben des Tuben-Feldes direkt und ohne Umverpackung beispielsweise in Form eines Kartons in der Schublade aufgenommen.

Bei einem Tuben-Feld handelt es sich vorzugsweise um eine Anordnung von mehreren vertikal ausgerichteten, nebeneinander insbesondere in Kontakt angeordneten Tuben oder Tuben-Rohlingen, die mit ihrem hinteren, noch offenen Tubenende nach oben weisen, so dass ein Greiffinger oder -zapfen in die Tube eingeführt werden und die Tube dadurch ergriffen werden kann.

In Weiterbildung der Erfindung kann vorgesehen sein, dass die Tuben des Tuben-Feldes frei zugänglich in der Schublade angeordnet ist, d.h. die Umsetzvorrichtung kann das Tuben-Feld zumindest teilweise vorzugsweise nach oben aus der Schublade herausheben, ohne zuvor eine Umverpackung öffnen oder ein sonstiges Hindernis oder eine Abdeckung abnehmen zu müssen.

In bevorzugter Ausgestaltung der Erfindung ist vorgesehen, dass in der Schublade mehrere Tuben-Felder nebeneinander und/oder übereinander angeordnet sind, so dass die Schublade eine relativ große Kapazität an Tuben bzw. Tuben-Feldern aufweist.

Vorzugsweise sind mehrere Schubladen übereinander und/oder nebeneinander an der Tragkonstruktion gelagert, so dass die Tragkonstruktion eine große Kapazität an Tuben-Feldern besitzt. Die mehreren Schubladen sind dabei vorzugsweise alle in parallele Richtungen verschiebbar und auf der gleichen Seite der Tragkonstruktion an dieser herausziehbar.

Bei der Tragkonstruktion kann es sich um ein Gestell oder vorzugsweise um ein schrankartiges Gehäuse handeln, an dem die Schublade bzw. die Schubladen verschieblich gelagert sind. Dabei können die Schubladen unabhängig voneinander relativ zur Tragkonstruktion verschieblich sein.

Die Schubladen können an einem von der Verpackungsmaschine entfernten Ort und ggf. auch in einer anderen Fabrik mit den Tuben oder Tuben-Feldern bestückt werden und sie werden dann in den Arbeitsbereich der Füllvorrichtung bzw. der Umsetzvorrichtung gebracht. Zu diesem Zweck kann in Weiterbildung der Erfindung vorgesehen sein, dass die Tragkonstruktion auf einem Fahrwerk angeordnet ist, so dass die Tragkonstruktion mit den Schubladen und den darin befindlichen Tuben-Feldern verfahren werden kann.

In Weiterbildung der Erfindung kann dabei vorgesehen sein, dass dem Fahrwerk eine Antriebvorrichtung, beispielsweise ein Elektro-Motor zugeordnet ist, mit dem die Tragvorrichtung in den Wirkungsbereich der Umsetzvorrichtung gebracht und aus diesem abgeführt werden kann. Die Fahrbewegungen der Tragvorrichtung können dabei durch einen Benutzer gesteuert oder automatisiert sein, indem ein automatisch geführtes Fahrzeug verwendet wird, das beispielsweise mittels in den Untergrund eingelassener Induktionsschleifen oder mittels Satelliten-Kommunikation gesteuert wird.

Als Umsetzvorrichtung findet vorzugsweise ein Industrie-Roboter, insbesondere ein Gelenkarm-Roboter Verwendung, der einen Greiferkopf tragen kann. Mittels des Greiferkopfes kann die Umsetzvorrichtung zumindest einige Tuben des Tuben-Feldes ergreifen, wenn diese sich noch in der Schublade befinden, und sie aus der Schublade herausheben und in den Tuben-Speicher der Verpackungsmaschine einsetzen.

Bei dem Tuben-Speicher handelt es sich vorzugsweise um ein Förderband, auf das die Tuben beispielsweise in horizontaler Ausrichtung aufgelegt werden und das die Tuben vorzugsweise zu einem Zwischenlager bringt, und/oder um einen vertikalen Tuben-Schacht, in den die Tuben von oben eingesetzt wird.

In bevorzugter Ausgestaltung der Erfindung ist vorgesehen, dass jede Schublade zwischen einer Ruheposition innerhalb der Tragvorrichtung und einer Entnahmeposition verstellt und insbesondere verschoben werden kann, in der die Tuben des in der Schublade angeordneten Tuben-Feldes für die Umsetzvorrichtung zugänglich ist. In Weiterbildung der Erfindung kann vorgesehen sein, dass die Umsetzvorrichtung so ausgestaltet ist, dass die Schublade mittels der Umsetzvorrichtung relativ zur Tragkonstruktion insbesondere zwischen der Ruheposition und der Entnahmeposition verschieblich ist.

Wenn das Verschieben der Schublade und das Entnehmen der Tuben des Tuben-Felds aus der Schublade mittels der Umsetzvorrichtung automatisiert ist, sollte die Schublade und somit die Tragkonstruktion eine vorbestimmte Position relativ zur Umsetzvorrichtung einnehmen oder der Maschinensteuerung muss zumindest die Position der Tragvorrichtung und somit der Schublade exakt bekannt sein, damit die Umsetzvorrichtung einige Tuben Tuben-Feldes ergreifen und aus der Schublade herausheben kann. Zu diesem Zweck ist in Weiterbildung der Erfindung eine Positionserfassungsvorrichtung vorgesehen sein, mittels der die Position der Lagervorrichtung und/oder der Schublade erfassbar ist. Vorzugsweise weist die Positionserfassungsvorrichtung eine Kamera auf, die vorzugsweise oberhalb eines Bereiches, in dem die Tragvorrichtung und/oder die Schublade positioniert sein soll, und/oder am Greiferkopf der Umsetzvorrichtung angebracht sein kann. Mittels der Kamera wird ermittelt, welche Position die Tragvorrichtung und/oder die Schublade hat, indem beispielsweise eine an der Tragvorrichtung und/oder der Schublade angebrachte Markierung gesucht und in ihrer Position erfasst wird. Daraufhin wird entweder die Position der Tragvorrichtung und/oder der Schublade soweit korrigiert, dass eine gewünschte SOLL-Position exakt oder mit nur geringer Abweichung erreicht ist. Zusätzlich oder alternativ ist es möglich, dass eine Positionsabweichung der Tragkonstruktion und/oder der Schublade dadurch ausgeglichen wird, dass die Steuerung der Umsetzvorrichtung einen entsprechend korrigierten und an die tatsächliche Position der Tragvorrichtung und/oder der Schublade angepassten Bewegungsablauf ausführt.

Hinsichtlich des Verfahrens wird die oben genannte Aufgabe dadurch gelöst, dass die Lagereinheit in Form zumindest einer Schublade ausgebildet ist und dass die Schublade vor der Entnahme der Tuben des Tuben-Felds aus einer Ruheposition in eine Entnahmeposition verschoben und nach der Entnahme der Tuben des Tuben-Felds oder aller Tuben-Felder aus der Entnahmeposition in die Ruheposition verschoben wird.

Dabei können mehrere Schubladen übereinander und/oder nebeneinander an oder in der Tragkonstruktion angeordnet sein, die vorzugsweise als schrankartiges Gehäuse ausgebildet ist.

Vorzugsweise werden die Schubladen nacheinander zwischen der Ruheposition und der Entnahmeposition verschoben. Somit wird zunächst eine erste Schublade in die Entnahmeposition verschoben und anschließend werden die Tuben des Tuben-Feldes oder der Tuben-Felder aus der ersten Schublade entnommen. Daraufhin wird die erste Schublade wieder in ihre Ruheposition verschoben, woraufhin eine zweite Schublade aus ihrer Ruheposition in die Entnahmeposition verschoben und dann die Tuben des Tuben-Feldes oder die darin befindlichen Tuben-Felder entnommen werden. Dieses Vorgehen wird solange fortgeführt, bis alle Schubladen entleert sind. Die Tragkonstruktion mit den leeren Schubladen wird dann manuell oder mittels eines motorischen Antriebs abgeführt und eine neue Tragkonstruktion mit mehreren Lagereinheiten in Form von mit Tuben-Feldern bestückten Schubladen wird der Umsetzvorrichtung zugeführt.

Vorzugsweise ist die Lagervorrichtung verfahrbar, wobei sie motorisch angetrieben sein kann. Die Lagervorrichtung wird in eine SOLL-Position verfahren oder zumindest in die Nähe einer gewünschten SOLL-Position gebracht. Anschließend wird das Erreichen der SOLL-Position mittels einer Positionserfassungsvorrichtung überprüft. Wenn sich bei dieser Überprüfung herausstellen sollte, dass die Tragkonstruktion mit den Schubladen von der SOLL-Position abweicht, wird entweder die Position der Tragkonstruktion verändert und/oder die Bewegungsabläufe der Umsetzvorrichtung werden entsprechend korrigiert und angepasst.

Im Folgenden werden beispielhaft der konstruktive Aufbau der Füllvorrichtung einer Verpackungsmaschine und das Verfahren zum Befüllen des Tuben-Speichers erläutert.

Eine Tragkonstruktion in Form eines kasten- oder schrankartigen Gehäuses trägt mehrere übereinander und/oder nebeneinander angeordnete Schubladen, wobei in jeder Schublade zumindest ein Tuben-Feld mit mehreren Tuben angeordnet ist. Das kasten- oder schrankartige Gehäuse ist auf einem Fahrwerk gelagert und wird in eine SOLL-Position im Arbeitsbereich der als Gelenkarm-Roboter ausgestalteten Umsetzvorrichtung gebracht.

An der Umsetzvorrichtung ist eine Kamera angeordnet, die eine vorbestimmte Markierung an dem schrankartigen Gehäuse erfasst und somit dessen Position feststellt. Die Steuerung der Umsetzvorrichtung weiß somit, wo sich die einzelnen Schubladen befinden.

Der Gelenkarm-Roboter trägt einen Greiferkopf, mit dem zunächst eine erste Schublade aus dem schrankartigen Gehäuse herausgezogen, d.h. aus einer Ruheposition in eine Entnahmeposition gebracht wird. In der Schublade ist ein Tuben-Feld umverpackungsfrei angeordnet und somit für die Umsetzvorrichtung frei zugänglich, ohne dass vorher das Tuben-Feld freigelegt werden muss. Die Umsetzvorrichtung ergreift zumindest einige Tuben des Tuben-Feldes mit dem Greiferkopf und hebt diese aus der Schublade heraus und legt sie in dem Tuben-Speicher ab.

Falls in der Schublade noch weitere Tuben und/oder weitere Tuben-Felder aufgenommen ist, werden auch diese mittels der Umsetzvorrichtung aus der Schublade entnommen und in den Tuben-Speicher eingesetzt.

Wenn die Schublade geleert ist, wird die Schublade mittels der Umsetzvorrichtung wieder in das kastenartige Gehäuse eingeschoben, d.h. in ihre Ruheposition gebracht, woraufhin eine weitere Schublade mittels der Umsetzvorrichtung aus dem kastenartigen Gehäuse herausgezogen, d.h. in ihre Entnahmeposition gebracht wird. Das Entnehmen der darin befindlichen Tuben und deren Einsetzen in den Tuben-Speicher erfolgt in genannter Weise.

Wenn alle Schubladen geleert sind und somit alle Tuben aller Tuben-Felder der Lagervorrichtung entnommen und in den Tuben-Speicher eingesetzt sind, wird das kastenartige Gehäuse weggefahren, was durch manuelles Verschieben oder mittels einer Antriebsvorrichtung erfolgen kann. Anschließend wird ein weiteres gleichartiges schrankartiges Gehäuse, in dem ebenfalls mehrere Schubladen angeordnet sind, die jeweils mit Tuben-Feldern gefüllt sind, in genannter Weise in den Wirkungsbereich der Umsetzvorrichtung gebracht.

Durch die Verwendung von Schubladen, die mit frei zugänglichen Tuben-Feldern bestückt sind, ist der Vorteil gegeben, dass keinerlei Verpackungsmüll entsteht, der entsorgt werden muss. Sobald die Lagervorrichtung bzw. das schrankartige Gehäuse in gewünschter Weise in den Wirkungsbereich der Umsetzvorrichtung gebracht ist, kann das Nachfüllen des Tuben-Speichers mit allen in der Lagervorrichtung bzw. deren Schubladen befindlichen Tuben-Felder automatisiert ablaufen.

Weitere Einzelheiten und Merkmale der Erfindung sind aus der folgenden Beschreibung eines Ausführungsbeispiels unter Bezugnahme auf die Zeichnungen ersichtlich. Es zeigen:
- Fig. 1: eine schematische perspektivische Ansicht der wesentlichen Komponenten einer erfindungsgemäßen Füllvorrichtung für einen Tuben-Speicher in einer ersten Phase eines Füllvorgangs,
- Fig. 2: die Füllvorrichtung gemäß Fig. 1 in einer zweiten Phase des Füllvorgangs,
- Fig. 3: die Füllvorrichtung gemäß Fig. 1 in einer dritten Phase des Füllvorgangs,
- Fig. 4: die Füllvorrichtung gemäß Fig. 1 in einer vierten Phase des Füllvorgangs,
- Fig. 5: die Füllvorrichtung gemäß Fig. 1 in einer fünften Phase des Füllvorgangs,
- Fig. 6: die Füllvorrichtung gemäß Fig. 1 in einer sechsten Phase des Füllvorgangs und
- Fig. 7: die Befüllvorrichtung gemäß Fig. 1 beim Verschieben der geleerten Schublade in die Ruheposition.

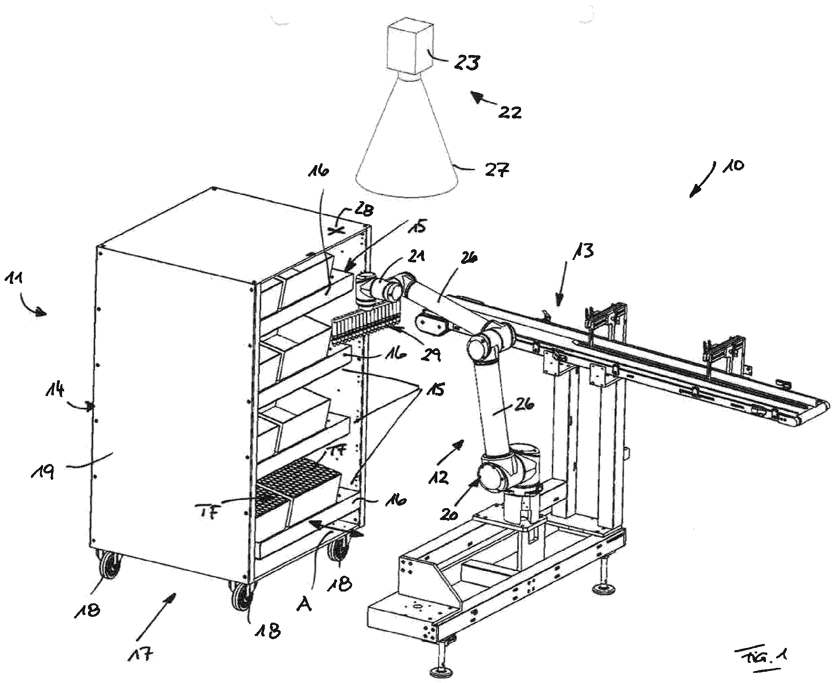

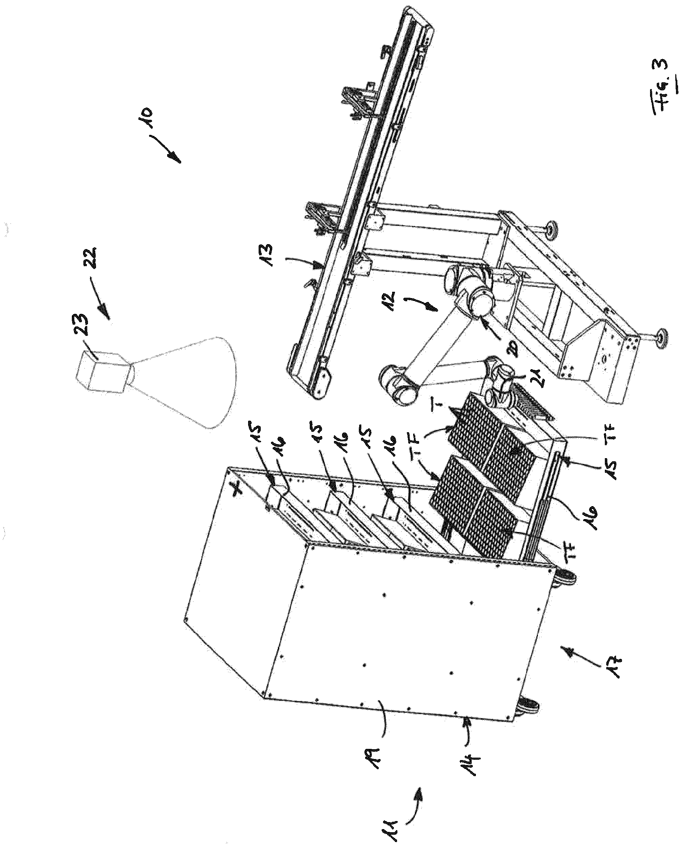

Eine in Fig. 1 schematisch dargestellte Füllvorrichtung 10 dient zum Befüllen eines Tuben-Speichers 13 einer Verpackungsmaschine, der in bekannter Weise ein im wesentlichen horizontal ausgerichtetes Förderband aufweist. Die Füllvorrichtung 10 umfasst eine Lagervorrichtung 11 mit einer Tragkonstruktion 14 in Form eines schrankartigen Gehäuses 19, das auf einem Fahrwerk 17 mit mehreren Rädern 18 am Erdboden abgestützt ist. Das schrankartige Gehäuse 19 ist an zumindest einer Seite offen und trägt im Inneren mehrere übereinander angeordnete Lagereinheiten 15, die jeweils als ausziehbare Schublade 16 ausgebildet sind. Die Schubladen 16 können unabhängig voneinander aus einer innerhalb des Gehäuses 19 angeordneten Ruhestellung, wie sie in Fig. 1 dargestellt ist, in eine aus dem Gehäuse 19 herausgezogenen Entnahmestellung (siehe Fig. 3) verstellt werden, wie es durch den Doppelpfeil A angedeutet ist.

Wie beispielsweise Fig. 3 zeigt, sind im Inneren jeder Schublade 16 vier Tuben-Felder TF nebeneinander in einem 2x2-Feld angeordnet.

Eine Umsetzvorrichtung 12 ist in Form eines Industrie-Roboters 20 mit mehreren gelenkig zueinander ausgebildeten Armen 26 ausgestaltet, der an seinem vorderen Ende einen Greiferkopf 21 mit mehreren Greifarmen 29 trägt. Oberhalb des Arbeitsbereiches der Umsetzvorrichtung 12 ist eine Positionserfassungsvorrichtung 22 mit einer Kamera 23 angeordnet, deren Erfassungsbereich 27 als Lichtkegel in Fig. 1 angedeutet ist. Das schrankartige Gehäuse 19 trägt auf seiner Oberseite eine Markierung 28, die mittels der Positionserfassungsvorrichtung 22 erfasst werden kann.

Im Folgenden wird anhand der Figuren 1 bis 7 das Befüllen des Tuben-Speichers 13 in einzelnen Schritten erläutert.

Das schrankartige Gehäuse 19, in dem zumindest einige Schubladen 16 mit mehreren Kartons bestückt sind, in denen jeweils ein Tuben-Feld TF mit mehreren Tuben T angeordnet ist, wird in eine Position im Arbeitsbereich der Umsetzvorrichtung 12 gebracht. Mittels der Positionserfassungsvorrichtung 22 wird die Markierung 28 am Gehäuse 19 ermittelt und somit die genaue Ist-Position des Gehäuses 19 in die Steuerung der Umsetzvorrichtung 12 eingegeben. Dieser Zustand ist in Fig. 1 dargestellt.

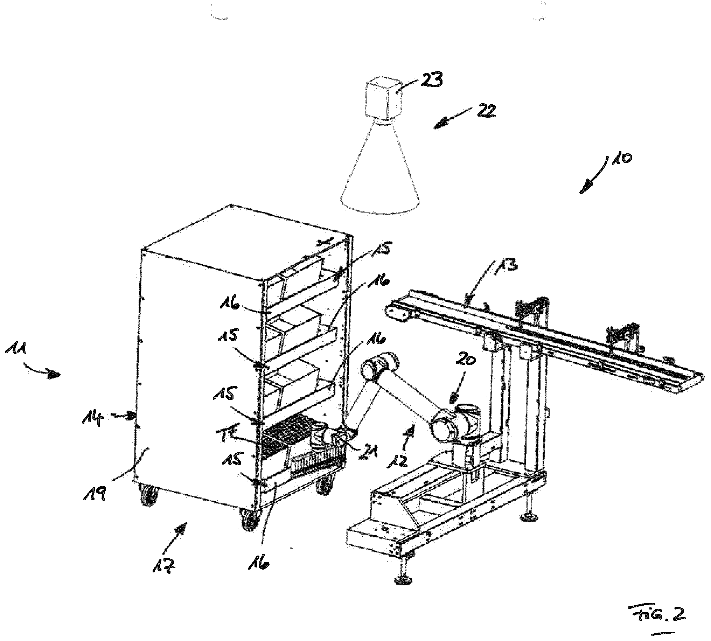

Anschließend beginnt der Befüllvorgang. Dazu wird der Greiferkopf 21 vor eine der Schubladen 16 verfahren, die sich in ihrer Ruheposition innerhalb des Gehäuses 19 befindet. Dieser Zustand ist in Fig. 2 dargestellt.

Der Greiferkopf 21 wird mit der Schublade 16 in Eingriff gebracht und die Schublade 16 wird aus dem Gehäuse 19 in eine Entnahmeposition herausgezogen, wie es in Fig. 3 dargestellt ist. Dieser Vorgang kann mittels der Positionserfassungsvorrichtung 22 überwacht werden. In der Entnahmeposition der Schublade 16 sind die in der Schublade 16 aufgenommenen Tuben T der Tuben-Felder TF von der Oberseite der Schublade 16 frei zugänglich, d.h. es ist keine weitere Abdeckung oder Umverpackung vorhanden.

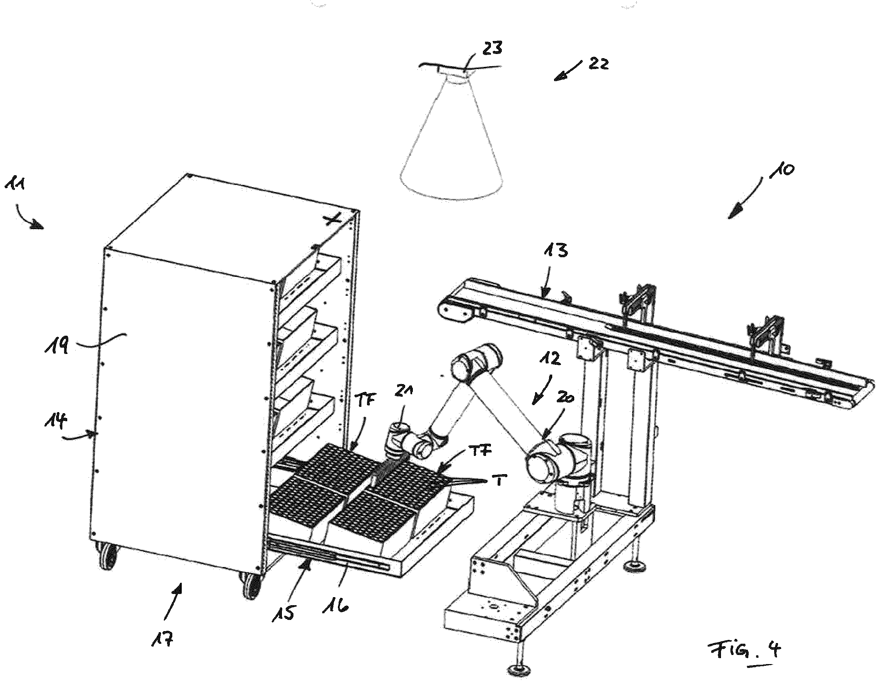

Sobald die Schublade 16 sich in ihrer aus dem Gehäuse 19 herausgezogenen Entnahmestellung befindet, wird der Greiferkopf 21 in eine Position oberhalb des Tuben-Felds TF gebracht, wobei seine Greiferarme 29 in einige der Tuben T des Tuben-feldes TF eingreifen, so dass ein Teil des Tuben-Feldes TF von den Greiferarmen 29 aufgenommen wird. Dieser Zustand ist in Fig. 4 dargestellt.

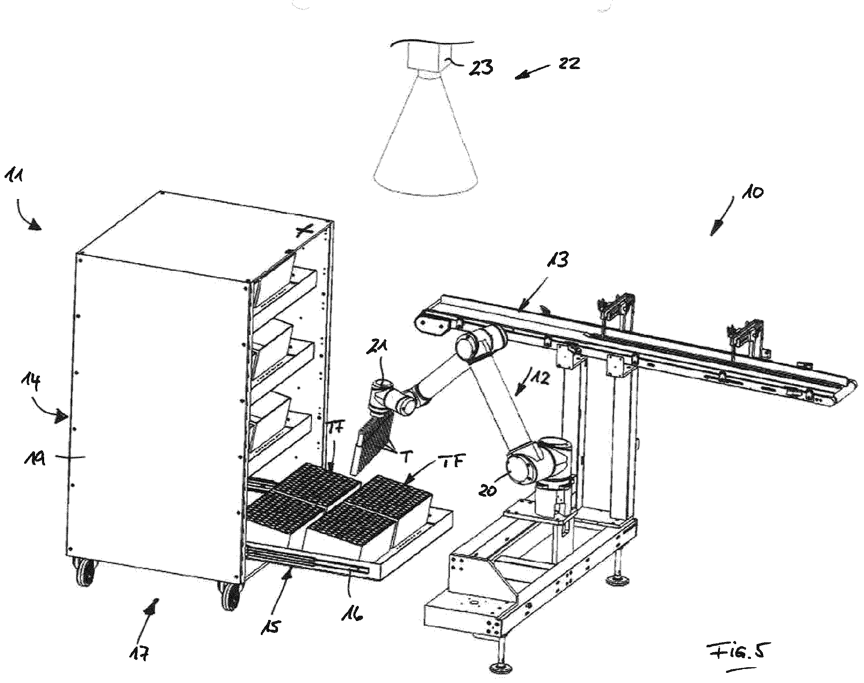

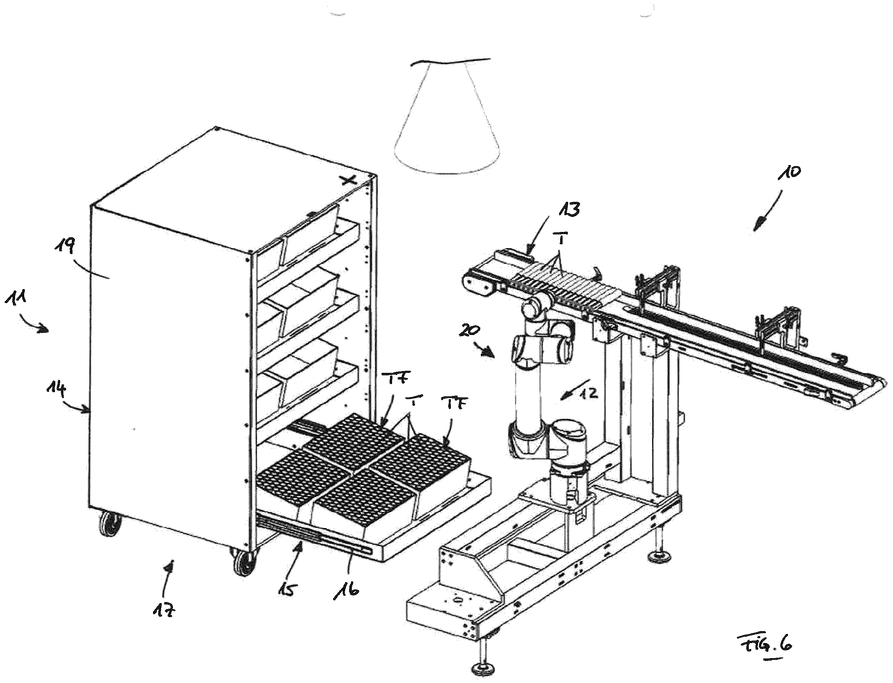

Nachdem der Greiferkopf 21 die Tuben T ergriffen hat, werden die Tuben T mittels entsprechender Bewegungen der Umsetzvorrichtung 12 aus der Schublade 16 herausgehoben (Fig. 5) und von oben in horizontaler Ausrichtung auf dem als Tuben-Speicher 13 dienenden Förderband abgelegt (Fig. 6). Anschließend werden die weiteren Tuben T des Tuben-Feldes TF in gleichartiger Weise entnommen und auf dem Förderband abgelegt, bis der zugehörige Karton vollständig geleert ist.

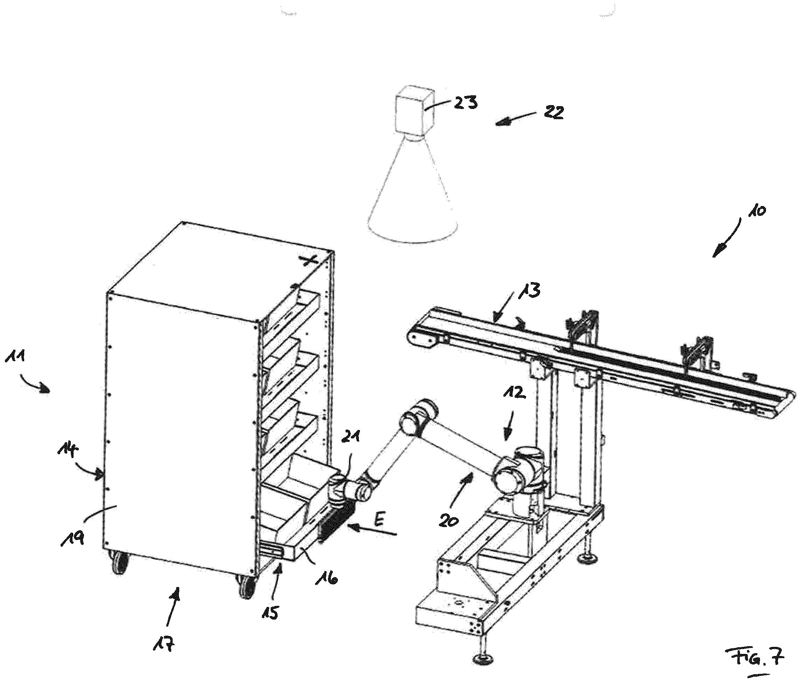

Nachdem alle Kartons der Schublade 18 geleert und alle Tuben-Felder TF aus der Schublade 16 entnommen sind, wird der Greiferkopf 21 wieder mit der Schublade 16 in Eingriff gebracht (Fig. 7) und die Schublade 16 wird durch entsprechende Verstellbewegungen der Umsetzvorrichtung 12 in das Gehäuse 19 eingeschoben, wie es durch den Pfeil E in Fig. 7 angedeutet ist.

Nachdem auf diese Weise alle Schubladen 16 geleert bzw. alle Tuben-Felder TF entnommen und in den Tuben-Speicher 13 eingesetzt sind, wird das schrankartige Gehäuse 19 weggefahren und ein neues entsprechendes schrankartiges Gehäuse wird in den Arbeitsbereich der Umsetzvorrichtung 12 gebracht, das mit Tuben-Feldern gefüllte Schubladen aufweist. Anschließend läuft der Füllvorgang in genannter Weise erneut ab.

## Patentansprüche

1. Füllvorrichtung (10) für einen Tuben-Speicher (13) einer Verpackungsmaschine, mit einer Lagervorrichtung (11) mit zumindest einer Lagereinheit (15), wobei in jeder Lagereinheit (15) zumindest ein Tuben-Feld (TF) mit mehreren Tuben (T) angeordnet ist, und einer Umsetzvorrichtung (12), mittels der zumindest einige Tuben (T) des Tuben-Feldes (TF) aus der Lagereinheit (15) entnehmbar und in den Tuben-Speicher (13) einsetzbar sind, wobei die Lagervorrichtung (11) eine Tragkonstruktion (14) aufweist, an der die Lagereinheit (15) abgestützt ist, **dadurch gekennzeichnet, dass** die Lagereinheit (15) zumindest eine Schublade (16) aufweist, die verschieblich an der Tragkonstruktion (14) gelagert ist.

2. Füllvorrichtung nach Anspruch 1, **dadurch gekennzeichnet, dass** das Tuben-Feld (TF) frei zugänglich in der Schublade (16) aufgenommen ist.

3. Füllvorrichtung nach Anspruch 1 oder 2, dadurch gegenzeichnet, dass in der Schublade (16) mehrere Tuben-Felder (TF) nebeneinander und/oder übereinander angeordnet sind.

4. Füllvorrichtung nach einem der Ansprüche 1 bis 3, dadurch gegenzeichnet, dass mehrere Schubladen (16) übereinander und/oder nebeneinander an der Tragkonstruktion (14) gelagert sind.

5. Füllvorrichtung nach Anspruch 4, dadurch gegenzeichnet, dass die Schubladen (16) unabhängig voneinander verschieblich sind.

6. Füllvorrichtung nach einem der Ansprüche 1 bis 5, dadurch gegenzeichnet, dass die Tragkonstruktion (14) ein schrankartiges Gehäuse (19) aufweist.

7. Füllvorrichtung nach einem der Ansprüche 1 bis 6, dadurch gegenzeichnet, dass die Tragkonstruktion (14) auf einem Fahrwerk (17) angeordnet ist.

8. Füllvorrichtung nach einem der Ansprüche 1 bis 7, dadurch gegenzeichnet, dass die Umsetzvorrichtung (12) ein Industrie-Roboter (20), insbesondere ein Gelenkarm-Roboter ist, der einen Greiferkopf (21) trägt.

9. Füllvorrichtung nach einem der Ansprüche 1 bis 8, dadurch gegenzeichnet, dass die Schublade (16) mittels der Umsetzvorrichtung (12) relativ zur Tragkonstruktion (14) verschiebbar ist.

10. Füllvorrichtung nach einem der Ansprüche 1 bis 9, gegenzeichnet durch eine Positionserfassungsvorrichtung (22), mittels der die Position der Lagervorrichtung (11) erfassbar ist.

11. Füllvorrichtung nach Anspruch 10, dadurch gegenzeichnet, dass die Positionserfassungsvorrichtung (22) eine Kamera (23) aufweist.

12. Füllvorrichtung nach Anspruch 11, dadurch gegenzeichnet, dass die Kamera (23) an dem Greiferkopf (21) angebracht und/oder oberhalb eines Arbeitsbereiches des Greiferkopfes (21) angeordnet ist.

13. Verfahren zum Füllen eines Tuben-Speichers (13) einer Verpackungsmaschine, insbesondere mittels einer Füllvorrichtung (10) gemäß einem der Ansprüche 1 bis 12, mit einer Lagervorrichtung (11) mit zumindest einer Lagereinheit (15), in der zumindest ein Tuben-Feld (TF) mit mehreren Tuben (T) angeordnet ist, wobei zumindest einige Tuben (T) des Tuben-Feldes (TF) mittels einer Umsetzvorrichtung (12) aus der Lagereinheit (15) entnommen und in den Tuben-Speicher (13) eingesetzt werden, **dadurch gekennzeichnet, dass** die Lagereinheit (15) in Form zumindest einer Schublade (16) ausgebildet ist und dass die Schublade (16) vor der Entnahme der Tuben (T) des Tuben-Felds (TF) aus einer Ruheposition in eine Entnahmeposition verschoben und nach der Entnahme der Tuben (T) des Tuben-Felds (TF) oder aller Tuben-Felder (TF) aus der Entnahmeposition in die Ruheposition verschoben wird.

14. Verfahren nach Anspruch 13, **dadurch gekennzeichnet, dass** mehrere Schubladen (16) übereinander und/oder nebeneinander angeordnet sind.

15. Verfahren nach Anspruch 14, **dadurch gekennzeichnet, dass** die Schubladen (16) nacheinander zwischen der Ruheposition und der Entnahmeposition verschoben werden.

16. Verfahren nach einem der Ansprüche 13 bis 15, **dadurch gekennzeichnet, dass** die Lagervorrichtung (11) verfahrbar ist und in eine Soll-Position verfahren wird.

17. Verfahren nach Anspruch 16, **dadurch gekennzeichnet, dass** das Erreichen der Soll-Position mittels einer Positionserfassungsvorrichtung (22) überprüft wird.
